# FASCICULE DE BREVET EUROPEEN

(11) **EP 3 852 993 B1**
(45) Date de publication et mention de la délivrance du brevet: **23.09.2026**
(21) Numéro de dépôt: 19794600.7
(22) Date de dépôt: 18.09.2019
(51) Int. Cl.: B65H 59/16, B28B 23/14, F16F 15/30, B29C 53/56, B29C 70/56

(54) **PROCÉDÉ DE FRETTAGE D'UNE PIÈCE CYLINDRIQUE PAR ENROULEMENT DE FIBRES SOUS TENSION**
VERFAHREN ZUM BINDEN EINES ZYLINDRISCHEN TEILS DURCH DAS GESPANNTE WICKELN VON FASERN
METHOD FOR BINDING A CYLINDRICAL PART BY THE TENSIONED WINDING OF FIBRES

(30) Priorité: 18.09.2018 FR 1858422
(43) Date de publication de la demande: 28.07.2021
(73) Titulaire: Energiestro, 28200 Châteaudun (FR)
(72) Inventeur: GENNESSEAUX, André, 28200 CONIE- MOLITARD (FR)
(74) Mandataire: Plasseraud IP
(86) Numéro de dépôt international: PCT/FR2019/052178
(87) Numéro de publication internationale: WO 2020/058630

(56) Documents cités:
- WO-A1-2017/203109
- FR-A1- 3 027 644
- FR-A1- 3 059 988
- US-A1- 2017 101 286

## Description

### DOMAINE TECHNIQUE DE L'INVENTION

La présente invention concerne un procédé de frettage d'une pièce cylindrique par enroulement de fibres sous tension, et plus spécifiquement un procédé de fabrication d'un volant d'inertie comportant au moins un cylindre en béton.

### ÉTAT DE LA TECHNIQUE

Il est courant d'utiliser un volant d'inertie dans les dispositifs de stockage d'énergie temporaire qui trouvent leurs applications dans de nombreux domaines, tels que dans le stockage et le lissage des énergies renouvelables intermittentes de type éolien ou solaire, l'alimentation en électricité de sites isolés, la restitution d'énergie pour le freinage de véhicules, etc.

Au contraire d'autres dispositifs de stockage d'énergie électrique, tels que les accumulateurs électriques, le volant d'inertie présente l'avantage principal d'une durée de vie quasiment illimitée, impliquant un coût de stockage et de maintenance dans le temps plus faible qu'avec les autres dispositifs.

Typiquement, un volant d'inertie comporte un corps plein massique, dénommé également usuellement par le terme de « masse », relié à un arbre rotatif d'un moteur électrique. Le moteur électrique entraîne en rotation le volant d'inertie qui peut atteindre des vitesses de rotation très élevées en quelques minutes, voire même en quelques secondes. Après l'arrêt de l'alimentation du moteur électrique, la masse du volant ayant emmagasiné de l'énergie cinétique continue de tourner et peut alors restituer de l'énergie mécanique qui est à son tour reconvertie en énergie électrique en utilisant par exemple le moteur comme génératrice électrique.

La force centrifuge subie par le volant d'inertie entraîne de très fortes contraintes en traction pour le matériau constitutif de sa masse. Il convient donc de choisir un matériau de fabrication qui est hautement résistant à la traction, comme l'acier ou le carbone. Mais ces matériaux sont très chers.

Le brevet EP3 212 960B1 de la Demanderesse décrit un procédé de réalisation d'un volant de stockage d'énergie en béton précontraint par de la fibre de verre enroulée sous tension. L'intérêt du béton est son très faible cout par rapport à l'acier et au carbone.

Ce volant comporte un corps massique, ou masse, comprenant un matériau principal constitutif en béton, ce corps étant enveloppé sur au moins une partie de sa surface externe de fibres de renforcement dont la tension d'enroulement autour du corps engendre la mise en compression dudit matériau principal. Le corps est cylindrique et les fibres de renforcement forment alors une enveloppe sous tension couvrant au moins la surface cylindrique extérieure du corps, éventuellement également les deux bases d'extrémité du corps cylindrique.

Le béton n'est pas un matériau ayant vocation à être utilisé pour un volant d'inertie à stockage d'énergie car il présente une résistance à la traction pratiquement nulle. En associant au béton des fibres de renforcement enroulées sous tension, malgré le défaut inhérent du béton relatif à sa relativement faible résistance à la traction, le volant présente de manière inattendue une propriété élevée de résistance à la traction, même pour des vitesses très importantes de rotation.

De manière surprenante, les fibres de renforcement associées à la surface extérieure de la masse en béton conduisent à pré-contraindre de manière suffisante le béton, de façon à générer les tensions appropriées qui s'opposeront aux forces de traction que subira le volant lors de sa rotation. L'ensemble béton/recouvrement extérieur du béton par des fibres de renforcement sous tension conduit avantageusement à une structure apte à résister aux forces de traction que subira un volant à stockage d'énergie. Une telle structure de volant permet d'atteindre des vitesses de rotation très élevées, bien avant le risque de rupture du matériau constitutif principal, permettant ainsi un stockage en grande quantité d'énergie.

L'enroulement sous tension, ou frettage, est une technologie bien connue qui sert à pré-contraindre des pièces en béton (tuyaux, réservoirs...). Le principe de base est d'enrouler un fil/des fibres autour d'une pièce cylindrique tout en exerçant une résistance sur le fil afin de le tendre. La tension dans le fil/les fibres enroulé(es) se traduit par une compression radiale dans la pièce cylindrique. Il est nécessaire de tendre le fil/les fibres autant que possible pour économiser la matière (avec une tension deux fois plus faible, il faut enrouler deux fois plus de fil/fibres pour atteindre la même compression). Mais appliquer une forte tension à un fil/des fibres en mouvement n'est pas évident.

La théorie montre que la tension transmissible à un fil/des fibres par adhérence sur un cylindre freiné est une fonction (exponentielle) de l'angle d'enroulement : T(α)=T(0).exp(µ.α), avec α l'angle d'enroulement et µ le coefficient de frottement entre le fil/les fibres et le cylindre. Pour passer d'une tension initiale faible à une tension finale élevée, l'angle peut être largement supérieur à un tour complet, ce qui implique qu'il est nécessaire d'utiliser plusieurs cylindres. Par exemple si la tension doit être multipliée par 1000 et que le coefficient de frottement est de 0,1, il faut plus de 10 tours complets, donc plus de 20 cylindres si on enroule le fil d'un demi-tour sur chaque cylindre.

On peut bien sûr utiliser plusieurs cylindres indépendants avec chacun son système de freinage, mais, s'il en faut beaucoup, le prix et l'encombrement deviennent prohibitifs, c'est pourquoi des solutions avec un seul système de freinage ont été proposées.

Le brevet FR2871454 décrit ainsi un système de freinage constitué de deux cylindres, dont l'un au moins est freiné. Le fil peut faire un grand nombre d'aller retours entre les cylindres, ce qui permet d'avoir un angle d'enroulement sur le cylindre freiné aussi grand que l'on veut.

Les systèmes décrits précédemment, dans lesquels la vitesse superficielle des cylindres est constante, fonctionnent bien avec des fils résistants comme le fil d'acier, mais pas avec des fils fragiles comme la fibre de verre qui est constituée de milliers de filaments très fins. La raison est qu'à la fin de l'opération de mise sous tension, le fil est soumis à des conditions très difficiles : sa tension, sa pression de contact avec le cylindre et sa vitesse de glissement sur le cylindre sont très élevées. Ces conditions peuvent provoquer la rupture de quelques filaments, qui peuvent ensuite se prendre dans la machine et entrainer la casse de la fibre.

Or, le glissement vient de l'élasticité de la fibre : elle s'allonge quand on tire dessus, si bien qu'elle est plus longue à la fin qu'au début, et sa vitesse est donc plus grande à la fin qu'au début, alors que la vitesse superficielle des cylindres est constante.

Le document WO 2017/203109 montre un autre exemple de machine et procédé d'application de fibres sur une surface pour la réalisation de pièces en matériaux composites, et comprenant un dispositif pour augmenter la tension de la fibre.

Le document FR 3 059 988 montre un procédé d'enroulement d'un élément filaire sous tension autour d'une pièce. La mise sous tension est obtenue par passage de l'élément filaire autour de galets. Les diamètres des galets peuvent être augmentés progressivement afin de tenir compte de l'allongement de l'élément filaire qui est mis sous tension.

### OBJET DE L'INVENTION

La présente invention a pour objectif de répondre au moins en partie aux limitations de l'art antérieur précédemment évoqué.

A cet effet, l'invention concerne un procédé de frettage d'une pièce cylindrique par enroulement de fibres sous tension, le procédé comprenant une étape préalable de passage desdites fibres autour d'au moins deux cylindres de tension freinés afin d'augmenter la tension dans celles-ciet consistant à augmenter le diamètre des cylindres à mesure que la tension dans les fibres augmente. Dans le procédé, n est un nombre entier strictement supérieur à 2 et correspondant au nombre total de cylindres, et m est un nombre entier strictement inférieur à n, et le procédé consiste à conserver un diamètre constant pour les m premiers cylindres (C1 ; Cm) puis à faire croître de façon arithmétique ledit diamètre des (n-m) derniers cylindres (Cm+1 ; Cn).

Selon des modes de réalisation préférés de la présente invention :
- le procédé consiste à augmenter la vitesse périphérique des cylindres à mesure que la tension dans les fibres augmente,
- n étant un nombre entier supérieur à 2 et correspondant au nombre total de cylindres, et p un nombre entier strictement inférieur à n, ledit procédé consiste à conserver une vitesse périphérique constante pour les p premiers cylindres (C₁ ; Cₚ) puis à faire croître ladite vitesse périphérique des (n- p) derniers cylindres (Cₚ₊₁ ; Cₙ),

- la vitesse périphérique des (n-p) derniers cylindres croît de façon arithmétique,
- le diamètre Dₙ du dernier cylindre Cₙ est au moins égal à 10% du diamètre de la pièce cylindrique à fretter,
- tous les cylindres sont synchronisés par des engrenages, une chaine ou une courroie crantée,
- le frein des cylindres comprend un moteur électrique synchronisé avec lesdits cylindres, fonctionnant en générateur et alimentant un moteur électrique de la pièce cylindrique à fretter,
- le nombre total n de cylindres (C₁ ; Cₙ) est supérieur à 2 et inférieur ou égal à 50, de préférence compris entre 10 et 30,
- le procédé fait passer la contrainte dans les fibres de renforcement d'environ 1 MPa à environ 1000 MPa.

L'invention se rapporte en outre à un procédé de fabrication d'un volant d'inertie tel que défini par les caractéristiques de la revendication 10.

### PRÉSENTATION DES FIGURES

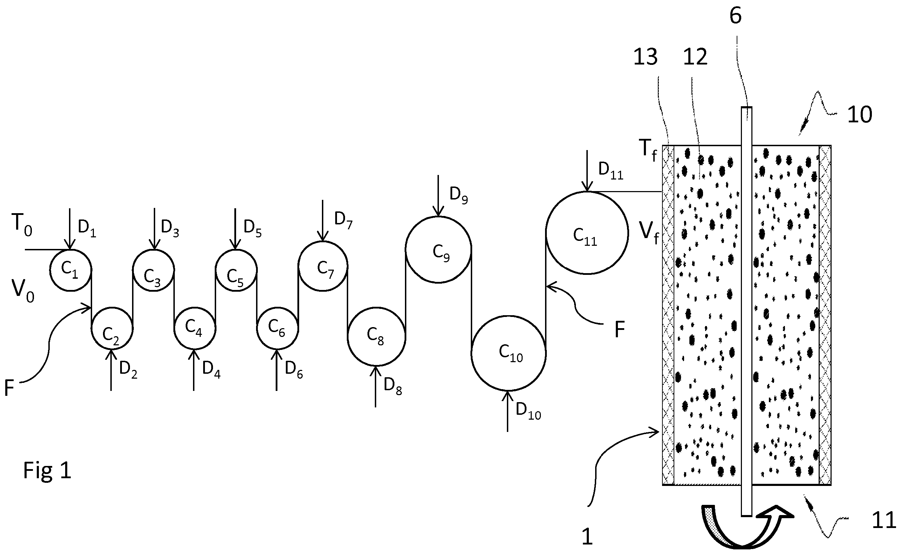

D'autres avantages, buts et caractéristiques particuliers de la présente invention ressortiront de la description non limitative qui suit d'au moins un mode de réalisation particulier dudit objet de la présente invention, en regard de la figure 1 qui représente un procédé de renforcement d'un volant d'inertie plein à l'aide de fibres mises sous tension.

Ainsi, la figure 1 illustre un volant d'inertie 1 de forme cylindrique s'étendant longitudinalement entre deux extrémités distales 10 et 11 le long d'un axe de révolution. Ce volant d'inertie 1 comprend une masse 12 faite d'un matériau constitutif tel que du béton, et une enveloppe 13 faite de fibres de renforcement F enroulées sous tension et induisant des forces de compression sur la masse 12. La masse 12 en béton est par exemple fabriquée par moulage. Le volant 1 intègre un arbre 6 qui dépasse des bases d'extrémités 10 et 11. Cet arbre 6 est rendu solidaire du corps du volant 1 lors de la fabrication par moulage de la masse 12, l'arbre 6 ayant préalablement été placé dans le moule dans lequel a été coulé le béton.

L'enveloppe 13 est obtenue en enroulant sous tension les fibres de renforcement F, par exemple des fibres de verre, autour de la masse en béton 12 afin d'engendrer une contrainte en compression sur ladite masse 12 lorsque celle-ci est au repos, c'est-à-dire en l'absence de rotation du volant 1. Le matériau de la masse 12 est ainsi précontraint.

A titre d'exemple, le matériau principal est en béton ayant une limite élastique à la compression de 100 MPa. Le diamètre du cylindre formant le cœur de béton 12 est sensiblement égal à 0,6 m. Il présente une longueur (hauteur) de 2 m. Sa masse est de 1,4 t environ.

L'épaisseur de l'enveloppe 13 en fibres de verre est par exemple de 12 mm. La masse de fibres de verre est de 0,11 t, soit très inférieure à la masse du cœur de béton 12.

Le procédé d'obtention des fibres F sous tension puis de leur enroulement autour du cylindre 12 est décrit ci-après.

Sur cette figure 1 sont représentés une suite de cylindres de tension freinés numérotés C₁ à C₁₁, et plus globalement C₁ à Cₙ avec n > 2.

Les fibres F sont étirées par passages successif sur une partie de la surface externe de chacun de ces cylindres qui sont mis en rotation de manière synchronisée. Plus précisément, les cylindres à indice impair tournent dans le sens des aiguille d'une montre tandis que les cylindres à indice pair tournent dans le sens inverse des aiguilles d'une montre, de sorte que les fibres F sont successivement mises en tension entre chaque paire de cylindres consécutifs (entre C₁ et C₂, puis C₂ et C₃, etc. jusqu'à Cₙ).

Comme cela a été présenté précédemment dans la partie introductive, l'invention consiste à augmenter le diamètre des cylindres C₁ à Cₙ au fur et à mesure de l'augmentation de la tension T dans les fibres F, afin de suivre leur allongement et limiter leur vitesse de glissement sur lesdits cylindres.

Ainsi, comme cela est visible sur la figure 1 (les proportions, notamment celles des cylindres, sont notablement exagérées pour une meilleure compréhension de la présente invention), les m premiers cylindres, m étant un nombre entier strictement inférieur à n, m valant par exemple 5 dans le cas présent, présentent tous le même diamètre Dₘ de sorte que D₁ =D₂=D₃=D₄=D₅.

Par contre, les (n-m) derniers cylindres Cₘ₊₁ à Cₙ, c'est-à-dire les cylindres C₆, C₇, C₈, C₉, C₁₀ et C₁₁, présentent un diamètre Dₙ qui augmente au fur et à mesure.

En pratique, les variations de diamètre des cylindres sont extrêmement faibles : pour une fibre de verre passant d'une contrainte de traction en entrée de 1 MPa à une contrainte en sortie de 1000 MPa et un allongement déterminé par exemple (non limitatif) de 1,4 %, la différence de diamètre entre deux cylindres à partir du cylindre de rang (m+1) est en moyenne de 0,15 %. Pour un cylindre C₆ de 50 mm de diamètre, cela fait une différence de 0,08 mm pour chaque cylindre de rang supérieur, imperceptible à l'œil nu, mais facilement réalisable en mécanique par rectification.

Le corolaire de cette augmentation du diamètre D des (derniers) cylindres est une augmentation de la vitesse périphérique de ces derniers à mesure que la tension T dans les fibres F augmente.

Ainsi, si Vₙ est la vitesse périphérique du cylindre n, on réalise donc : V₁<V₂<V₃<V₄<...<Vₙ.

Il est possible d'utiliser des cylindres de diamètres très différents, tournant à des vitesses différentes, à condition de respecter la condition V₁<V₂<V₃<V₄<...<Vₙ. Cela peut être intéressant pour réduire la pression de contact, qui est proportionnelle à la tension et inversement proportionnelle au diamètre du cylindre. Il faut donc augmenter le diamètre des derniers cylindres, où la tension de la fibre est la plus élevée.

De préférence, le diamètre Dₙ du dernier cylindre Cₙ est au moins égal à 10% du diamètre de la pièce cylindrique à fretter.

Ainsi, la relation ci-dessus n'est valable qu'à partir du cylindre de rang p+1, p étant un nombre entier strictement inférieur à n, et ce jusqu'au dernier cylindre de rang n.

Par conséquent, si Vₙ est la vitesse périphérique du cylindre n, on réalise donc : Vₚ₊₁<Vₚ₊₂<Vₚ₊₃<Vₚ₊₄<...<Vₙ. Dans le cas présent, cela signifie que V₆<V₇<V₈<V₉<V₁₀<V₁₁.

De préférence on s'arrangera pour que m=p.

D'un point de vue mathématique, si le premier cylindre C₁ présente un diamètre D₁, et fait passer la tension dans les fibres F de T₀ à T₁, le second cylindre aura un diamètre D₂ égal à : ${D}_{2} = {D}_{1} \times \left(1+{T}_{1}/\left(S\times E\right)\right) / \left(1+{T}_{0}/\left(S\times E\right)\right) ,$ où S est la section de la fibre, et E son module de Young.

T₀ / (S x E) est l'allongement de la fibre à l'entrée du premier cylindre C₁.

T₁ / (S x E) est l'allongement de la fibre à la sortie du premier cylindre C₁.

De cette façon, la fibre arrive sur chaque cylindre avec un glissement nul : ils sont « synchronisés ».

En pratique, le glissement est très faible sur les premiers cylindres, mais il augmente de façon exponentielle au fur et à mesure que la tension T dans les fibres F croît. Quand le glissement atteint une certaine valeur (par exemple ici la valeur de 0,1% choisie arbitrairement et à titre d'exemple non limitatif), il est possible de réduire l'augmentation du diamètre des cylindres. Avantageusement, la vitesse périphérique des (n-p) derniers cylindres augmente de manière arithmétique, plutôt que de manière exponentielle.

Avec la présente invention, il est possible de choisir la contribution de chaque cylindre à l'augmentation de tension totale dans les fibres F. En pratique, cela signifie qu'il n'est pas nécessaire d'avoir du glissement sur la totalité de la zone de chaque cylindre C autour duquel les fibres F passent.

L'angle de glissement est différent de l'angle d'enroulement. L'angle d'enroulement est donné par la géométrie de la machine, et il reste constant. L'angle de glissement dépend du couple appliqué sur le cylindre : il varie entre 0 (couple nul) et l'angle d'enroulement (couple maximal transmissible). On peut donc avoir enroulement sur 180°, mais glissement sur seulement 40°.

Il est ainsi possible d'utiliser la totalité de la zone enroulée au début, quand la tension est faible, et ne l'utiliser que partiellement à la fin, quand la tension est forte. On peut ainsi limiter la vitesse de glissement maximale et préserver la fibre. En contrepartie, il faudra installer plus de cylindres, leur nombre pouvant varier de quelques-uns à une cinquantaine et avantageusement entre environ 10 et 30.

Afin de réduire encore le glissement maximal, une progression arithmétique du diamètre D des derniers cylindres est faite, et donc également de leurs vitesses périphériques respectives.

Pour réduire la pression de contact entre les fibres et les cylindres, qui peut atteindre 4 MPa (40 bar) et risquer d'endommager les fibres qui sont en train de glisser sur le cylindre, il convient d'augmenter fortement le diamètre D des cylindres afin que le(s) dernier(s) d'entre eux soi(en)t assez gros par rapport au volant d'inertie 1. Une progression arithmétique du diamètre D des derniers cylindres est là encore faite. Avantageusement, le diamètre Dₙ du dernier cylindre Cₙ est au moins égal à 10% du diamètre de la pièce cylindrique à fretter.

Des engrenages permettent d'obtenir la synchronisation des différentes vitesses de rotation, puis l'ajustement des diamètres permet d'obtenir le glissement voulu sur chaque cylindre.

Il est intéressant de noter que cette augmentation de diamètre pour réduire la pression de contact est indépendante de l'augmentation de la vitesse périphérique pour réduire le glissement.

En pratique, la procédure suivante est utilisée :
- le diamètre approché des cylindres est d'abord calculé pour limiter la pression de contact ;
- les engrenages sont choisis pour permettre d'obtenir une vitesse périphérique sensiblement constante (une poulie 4 fois plus grande tournera 4 fois moins vite) ;
- le diamètre exact des cylindres permettant d'obtenir la vitesse périphérique prévue pour limiter le glissement est ensuite recalculé.

Il est également prévu de munir le frein des cylindres d'un moteur électrique synchronisé avec lesdits cylindres, fonctionnant en générateur et alimentant un moteur électrique de la pièce cylindrique à fretter

Une fois obtenues, les fibres de verre F sont enroulées selon un angle proche de 90° par rapport à l'axe longitudinal 6 du cylindre en béton 12 du volant d'inertie 1, et sous une tension qui engendre une contrainte de l'ordre de 1000 MPa. La précontrainte initiale (compression) dans le béton est de 50 MPa. Le volant 1 peut tourner jusqu'à 7700 tours/min, vitesse à laquelle la précontrainte dans le béton devient nulle. L'énergie stockée est alors de 23 MJ ou 6,4 kWh.

Par conséquent, l'invention, grâce au matériau principal de la masse du volant, qui est précontraint via l'enroulement de fibres de renforcement sous tension, permet de fournir une compression dudit matériau telle qu'il est possible d'atteindre des vitesses de rotation élevées avant d'atteindre la rupture du matériau, ce qui permet très avantageusement de stocker une grande quantité d'énergie.

Il doit être bien entendu que la description détaillée de l'objet de l'Invention, donnée uniquement à titre d'illustration, ne constitue en aucune manière une limitation, les équivalents techniques étant également compris dans le champ de la présente invention, à condition d'être compris dans le champ des revendications.

Les engrenages peuvent également être remplacés par une chaine ou une courroie crantée.

## Revendications

1. - Procédé de frettage d'une pièce cylindrique (1) par enroulement de fibres (F) sous tension comprenant une étape préalable de passage desdites fibres (F) autour d'au moins deux cylindres de tension freinés (C₁ ; C₂) afin d'augmenter la tension dans celles-ci et consistant à augmenter le diamètre D des cylindres à mesure que la tension dans les fibres (F) augmente, **caractérisé en ce que**, n étant un nombre entier strictement supérieur à 2 et correspondant au nombre total de cylindres, et m étant un nombre entier strictement inférieur à n, ledit procédé consiste à conserver un diamètre constant pour les m premiers cylindres (C₁ ; Cₘ) puis à faire croître de façon arithmétique ledit diamètre des (n-m) derniers cylindres (Cₘ₊₁ ; Cₙ).

2. - Procédé selon la revendication 1, **caractérisé en ce qu'**il consiste à augmenter la vitesse périphérique des cylindres à mesure que la tension dans les fibres augmente.

3. - Procédé selon la revendication 2, **caractérisé en ce que**, n étant un nombre entier strictement supérieur à 2 et correspondant au nombre total de cylindres, et p étant un nombre entier strictement inférieur à n, ledit procédé consiste à conserver une vitesse périphérique constante pour les p premiers cylindres (C₁ ; Cₚ) puis à faire croître ladite vitesse périphérique des (n- p) derniers cylindres (Cₚ₊₁ ; Cₙ).

4. - Procédé selon la revendication 3, **caractérisé en ce que** la vitesse périphérique des (n-p) derniers cylindres croît de façon arithmétique.

5. - Procédé selon l'une quelconque des revendications précédentes, **caractérisé en ce que** le diamètre Dₙ du dernier cylindre Cₙ est au moins égal à 10% du diamètre de la pièce cylindrique à fretter.

6. - Procédé selon l'une quelconque des revendications précédentes, **caractérisé en ce que** tous les cylindres sont synchronisés par des engrenages, une chaine ou une courroie crantée.

7. - Procédé selon la revendication 6, **caractérisé en ce qu'**il consiste à munir le frein des cylindres d'un moteur électrique synchronisé avec lesdits cylindres, fonctionnant en générateur et alimentant un moteur électrique de la pièce cylindrique à fretter.

8. - Procédé selon l'une quelconque des revendications précédentes, **caractérisé en ce que** le nombre total n de cylindres (C₁ ; Cₙ) est supérieur à 2 et inférieur ou égal à 50, de préférence compris entre 10 et 30.

9. - Procédé selon l'une quelconque des revendications précédentes, **caractérisé en ce qu'**il fait passer la contrainte dans les fibres de renforcement d'environ 1 MPa à environ 1000 MPa.

10. - Procédé de fabrication d'un volant d'inertie (1), **caractérisé en ce qu'**il comporte une étape de fabrication d'un corps en béton (12) par moulage, puis, après durcissement du béton, une étape de frettage du corps en béton (12) par enroulement de fibres (F) sous tension à l'aide du procédé selon l'une quelconque des revendications 1 à 9.

## Patentansprüche

1. - Verfahren zur Bewehrung eines zylindrischen Teils (1) durch Wickeln von Fasern (F) unter Spannung, umfassend einen vorbereitenden Schritt des Führens der Fasern (F) um mindestens zwei gebremste Spannzylinder (C₁; C₂), um die Spannung in diesen zu erhöhen, und bestehend aus dem Erhöhen des Durchmessers D der Zylinder, während die Spannung in den Fasern (F) zunimmt, **dadurch gekennzeichnet, dass**, wobei n eine ganze Zahl streng größer als 2 ist und der Gesamtzahl der Zylinder entspricht, und m eine positive ganze Zahl streng kleiner als n ist, das Verfahren darin besteht, einen konstanten Durchmesser für die m ersten Zylinder (C₁; Cₘ) beizubehalten und dann den Durchmesser der (n-m) letzten Zylinder (Cₘ₊₁; Cₙ) arithmetisch zu erhöhen.

2. - Verfahren nach Anspruch 1, **dadurch gekennzeichnet, dass** es darin besteht, die Umfangsgeschwindigkeit der Zylinder zu erhöhen, während die Spannung in den Fasern zunimmt.

3. - Verfahren nach Anspruch 2, **dadurch gekennzeichnet, dass**, wobei n eine ganze Zahl streng größer als 2 ist und der Gesamtzahl der Zylinder entspricht, und p eine positive ganze Zahl streng kleiner als n ist, das Verfahren darin besteht, eine konstante Umfangsgeschwindigkeit für die p ersten Zylinder (C₁; Cₚ) beizubehalten und dann die Umfangsgeschwindigkeit der (n- p) letzten Zylinder (Cₚ₊₁; Cₙ) zu erhöhen.

4. - Verfahren nach Anspruch 3, **dadurch gekennzeichnet, dass** die Umfangsgeschwindigkeit der (n-p) letzten Zylinder arithmetisch zunimmt.

5. - Verfahren nach einem der vorhergehenden Ansprüche, **dadurch gekennzeichnet, dass** der Durchmesser Dₙ des letzten Zylinders Cₙ mindestens gleich 10 % des Durchmessers des zu bewehrenden zylindrischen Teils ist.

6. - Verfahren nach einem der vorhergehenden Ansprüche, **dadurch gekennzeichnet, dass** alle Zylinder durch Zahnräder, eine Kette oder einen Zahnriemen synchronisiert sind.

7. - Verfahren nach Anspruch 6, **dadurch gekennzeichnet, dass** es darin besteht, die Bremse der Zylinder mit einem mit den Zylindern synchronisierten synchronen Elektromotor zu versehen, der als Generator arbeitet und einen Elektromotor des zu bewehrenden zylindrischen Teils speist.

8. - Verfahren nach einem der vorhergehenden Ansprüche, **dadurch gekennzeichnet, dass** die Gesamtzahl n der Zylinder (C₁; Cₙ) größer als 2 und kleiner oder gleich 50, vorzugsweise zwischen 10 und 30, ist.

9. - Verfahren nach einem der vorhergehenden Ansprüche, **dadurch gekennzeichnet, dass** es die Beanspruchung in den Verstärkungsfasern von etwa 1 MPa auf etwa 1000 MPa überführt.

10. - Herstellungsverfahren für ein Schwungrad (1), **dadurch gekennzeichnet, dass** es einen Schritt der Herstellung eines Betonkörpers (12) durch Gießen, dann, nach dem Aushärten des Betons, einen Schritt der Bewehrung des Betonkörpers (12) durch Wickeln von Fasern (F) unter Spannung mithilfe des Verfahrens nach einem der Ansprüche 1 bis 9 umfasst.

## Claims

1. **-** Method for binding a cylindrical part (1) by the tensioned winding of fibers (F), comprising a preliminary step of said fibers (F) passing around at least two braked tensioning cylinders (C₁; C₂) in order to increase the tension therein and consisting of increasing the diameter D of the cylinders as the tension in the fibers (F) increases, **characterized in that**, n being an integer strictly greater than 2 and corresponding to the total number of cylinders, and m being an integer strictly less than n, said method consists of maintaining a constant diameter for the first m cylinders (C₁; Cₘ) then increasing arithmetically said diameter of the last (n-m) cylinders (Cₘ₊₁; Cₙ).

2. **-** Method according to claim 1, wherein it consists of increasing the peripheral velocity of the cylinders as the tension in the fibers increases.

3. **-** Method according to claim 2, wherein, n being an integer strictly greater than 2 and corresponding to the total number of cylinders, and p being an integer strictly less than n, said method consists of maintaining a constant peripheral velocity for the first p cylinders (C₁; Cₚ) then increasing said peripheral velocity of the last (n-p) cylinders (Cₚ₊₁; Cₙ).

4. **-** Method according to claim 3, wherein the peripheral velocity of the last (n-p) cylinders increases arithmetically.

5. **-** Method according to any one of the preceding claims, wherein the diameter Dₙ of the last cylinder Cₙ is at least equal to 10% of the diameter of the cylindrical part to be bound.

6. **-** Method according to any one of the preceding claims, wherein all the cylinders are synchronized by gears, or by a chain, or by a toothed belt.

7. **-** Method according to claim 6, wherein it consists of providing the brake of the cylinders with an electric motor synchronized with said cylinders, operating as a generator and supplying power to an electric motor of the cylindrical part to be bound.

8. **-** Method according to any one of the preceding claims, wherein the total number n of cylinders (C₁; Cₙ) is greater than 2 and lower or equal to 50, preferably between 10 and 30.

9. **-** Method according to any one of the preceding claims, wherein it causes the stress in the reinforcing fibers to increase from about 1 MPa to about 1000 MPa.

10. **-** Method for manufacturing a flywheel (1), **characterized in that** it comprises a step of manufacturing a concrete body (12) by molding, then, after the hardening of the concrete, a step of binding the concrete body (12) by winding tensioned fibers (F) using the method according to any one of claims 1 to 9.
